# EUROPEAN PATENT SPECIFICATION

(11) **EP 4 521 121 B1**
(45) Date of publication and mention of the grant of the patent: **11.11.2026**
(21) Application number: 24194060.0
(22) Date of filing: 12.08.2024
(51) Int. Cl.: G01P 3/44, G01P 3/48

(54) **APPARATUS AND METHODS FOR CALCULATING AN ANGULAR SPEED OF A ROTARY COMPONENT**
VORRICHTUNG UND VERFAHREN ZUR BERECHNUNG EINER WINKELGESCHWINDIGKEIT EINER ROTIERENDEN KOMPONENTE
APPAREIL ET PROCÉDÉS DE CALCUL D'UNE VITESSE ANGULAIRE D'UN COMPOSANT ROTATIF

(30) Priority: 11.09.2023 GB 202313802
(43) Date of publication of application: 12.03.2025
(73) Proprietor: Rolls-Royce plc, London N1 9FX (GB)
(72) Inventor: Watson, Graham, Derby, DE24 8BJ (GB); Merrett, Benedict, Derby, DE24 8BJ (GB)
(74) Representative: Rolls-Royce plc

(56) References cited:
- WO-A1-2016/032905
- JP-A- H03 118 479
- US-A1- 2011 219 741
- US-A1- 2012 242 351
- US-A1- 2021 255 302
- US-A1- 2022 308 192

## Description

### TECHNICAL FIELD

The present disclosure concerns apparatus and methods for calculating an angular speed of a rotary component. The present disclosure also concerns gas turbine engines comprising such apparatus as well as a rotary component.

### BACKGROUND

It is generally desirable to calculate and/or monitor an angular speed of a shaft of a gas turbine engine. In particular, the angular speed of the shaft may be used for the purpose of, for example, a control logic, an overspeed protection logic and/or a shaft break logic of a controller of the gas turbine engine.

To this end, it is known to provide a toothed phonic wheel mounted to a high-pressure, an intermediate-pressure and/or a low-pressure shaft of a gas turbine engine and to place a reluctance probe nearby for the purpose of acquiring (e.g., calculating) a speed (e.g., an angular speed) of the relevant shaft of the gas turbine engine. An output from the reluctance probe is a sinusoidal electrical signal, with a frequency of this signal being approximately equal to a frequency with which the teeth of the phonic wheel pass the reluctance probe. This signal is then converted into a pulse train by electronic hardware and passed into a field-programmable gate array (FPGA) which counts a time period between respective pulses and converts the counted time period(s) into an angular speed of the shaft which is then provided to a controller of the gas turbine engine for use in, by way of example, logics as described above.

US2012/242351 relates to measurement of bladed rotors and, more particularly, speed measurement of bladed rotors in a turbine engine using microwave probes. An apparatus for measuring bladed rotors includes a microwave sensor that radiates a microwave signal toward a bladed rotor and receives a reflected microwave signal from the bladed rotor, a radio frequency module that generates the microwave signal radiated by the microwave sensor and down-converts the reflected microwave signal into a down-converted signal, and a main processing module configured to generate an output pulse train signal representative of a speed of the bladed rotor based on the down-converted signal. A method for measuring bladed rotors includes radiating a microwave signal, receiving a reflected microwave signal, down-converting the reflected microwave signal, and generating an output pulse train signal representative of a speed of a bladed rotor based on the down-converted signal.

WO2016/032905 relates to a method for mitigating channel interference while sensing true ground velocity. The method comprises: transmitting a first radio frequency ("RF") signal, wherein the first RF signal is transmitted at a first transmit frequency; receiving a first reflected signal at a first receive antenna on the device, the first reflected signal having a first reflected signal frequency, wherein the first reflected signal frequency is offset from the first transmit frequency by a first offset; transmitting a second RF signal from the transmit antenna, wherein the second RF signal is transmitted at a second transmit frequency; receiving a second reflected signal at the first receive antenna, the second reflected signal having a second reflected signal frequency, wherein the second reflected signal frequency is offset from the second transmit frequency by a second offset; and determining whether a velocity threshold has been exceeded based on the first and second offset. US 2011/219741 A1 relates to the measurement of angular speed of a turbine by sensing pressure dynamically in the time domain, converting this pressure data to the frequency domain with a fast Fourier transform, identifying the highest magnitude in the frequency domain and calculating angular speed by dividing the highest magnitude by the number of blades.

The effectiveness of such logics carried out by the controller of the gas turbine engine is dependent on the calculated and/or monitored angular speed of the shaft. It is therefore desirable to provide an improved method and/or apparatus for calculating the angular speed of a rotary component such as a shaft of a gas turbine engine.

### SUMMARY

According to a first aspect there is provided an apparatus as claimed in claim 1.

The processor circuitry may be configured to: convert the combined time-domain array into a combined frequency-domain data array in response, e.g. only in response, to a determination that a predetermined number of new elements have been recorded in the combined time-domain array. It may be that the predetermined number of new elements is greater than unity.

The processor circuitry may be configured to: multiply each value in the combined time-domain frequency array by a respective predetermined coefficient prior to converting the combined time-domain array into a combined frequency-domain data array. Each predetermined coefficient may be derived from a Hamming window function.

It may be that a size of the combined time-domain array is selected based on a physical characteristic of the rotary component and an expected maximum angular speed of the rotary component.

The rotary component may have a number of blades. The physical characteristic of the rotary component may be the number of blades of the rotary component.

It may also be that the processor circuitry is configured to: filter the identified one or more local maxima such that each of the identified one or more local maxima has a magnitude which exceeds a predetermined magnitude threshold.

Further, it may be that the rotary component has a number of blades, and the processor circuitry is configured to: calculate the instant angular speed of the rotary component based on an individual one of the identified one or more local maxima and the number of blades of the rotary component, the individual local maximum being selected as relating to a frequency which approximately corresponds to double a frequency with which a blade of the rotary component passes a reference point.

It may be that the processor circuitry is configured to: in response to a determination that the number of identified one or more local maxima is equal to or greater than 2: find a first index, wherein the first index being the index of the local maximum having the lowest frequency of all the identified one or more local maxima; find a second index, wherein the second index is the index of the local maximum having the largest magnitude of all the identified one or more local maxima; select the individual local maximum as being the local maximum having the second-largest magnitude of all the identified one or more local maxima, if the first index is the same as the second index; and select the individual local maximum as being the local maximum with the second index, if the first index differs from the second index.

The processor circuitry may be configured to: determine a doubled rotational frequency of the rotary component based on the individual one of the identified local maxima and at least a pair of adjacent values on opposing sides of the individual one of the identified local maxima in the combined frequency-domain data array; and calculate the instant angular speed of the rotary component based on the doubled rotational frequency of the rotary component.

The processor circuitry may be configured to: record a history of the instant angular speed of the rotary component; and calculate a median time-averaged angular speed of the rotary component based on the recorded history of the instant angular speed of the rotary component.

The processor circuitry may be configured to process the received in-phase signal and the received quadrature signal so as to convert each from an analogue signal into a digital signal prior to the in-phase signal and the quadrature signal being arithmetically summed to produce the combined time-domain signal. The processor circuitry may be configured such that a temporal misalignment between the converted digital in-phase signal and the converted digital quadrature signal is no greater than 1.5 microseconds.

According to a second aspect there is provided a system comprising an apparatus according to the first aspect and the sensor arrangement, wherein the sensor arrangement is configured to generate the in-phase signal and the quadrature signal according to the angular position of the rotary component.

It may be that the sensor arrangement comprises a microwave sensor, and that the sensor arrangement is configured to generate the in-phase signal and the quadrature signal based on a feedback signal produced by the microwave sensor.

The sensor arrangement may be configured to generate the in-phase signal and a quadrature signal with a temporal misalignment therebetween of no greater than 1.5 microseconds.

According to a third aspect there is provided a gas turbine engine comprising: an apparatus according to the first aspect or a system according to the second aspect, the rotary component and a controller, wherein the controller is configured to control operation of the gas turbine engine based on the calculated angular speed of the rotary component.

According to a fourth aspect there is provided a method as claimed in claim 13.

The method may comprise: converting the combined time-domain array into a combined frequency-domain data array only in response to a determination that a predetermined number of new elements have been recorded in the combined time-domain array. It may be that the predetermined number of new elements is greater than unity.

The method may comprise: multiplying each value in the combined time-domain frequency array by a respective predetermined coefficient prior to converting the combined time-domain array into a combined frequency-domain data array. It may be that each predetermined coefficient is derived from a Hamming window function.

It may be that a size of the combined time-domain array is selected based on a physical characteristic of the rotary component and an expected maximum angular speed of the rotary component.

The method may comprise: filtering the identified one or more local maxima such that each of the identified one or more local maxima has a magnitude which exceeds a predetermined magnitude threshold.

It may be that the method comprises: calculating the instant angular speed of the rotary component based on an individual one of the identified one or more local maxima and a number of blades of the rotary component, the individual local maximum being selected as relating to a frequency which approximately corresponds to double a frequency with which a blade of the rotary component passes a reference point.

It may be that the method comprises: in response to a determination that the number of identified one or more local maxima is equal to or greater than 2: finding a first index, wherein the first index being the index of the local maximum having the lowest frequency of all the identified one or more local maxima; finding a second index, wherein the second index is the index of the local maximum having the largest magnitude of all the identified one or more local maxima; selecting the individual local maximum as being the local maximum having the second-largest magnitude of all the identified one or more local maxima, if the first index is the same as the second index; and selecting the individual local maximum as being the local maximum with the second index, if the first index differs from the second index.

The method may comprise: determining a doubled rotational frequency of the rotary component based on the individual one of the identified local maxima and at least a pair of adjacent values on opposing sides of the individual one of the identified local maxima in the combined frequency-domain data array; and calculating the instant angular speed of the rotary component based on the doubled rotational frequency of the rotary component.

The method may comprise: recording a history of the instant angular speed of the rotary component; and calculating a median time-averaged angular speed of the rotary component based on the recorded history of the instant angular speed of the rotary component.

According to a fifth aspect there is provided a computer program comprising instructions which, when the program is executed by a computer, cause the computer to carry out a method according to the fourth aspect.

According to a sixth aspect there is provided a non-transitory computer-readable medium comprising instructions which, when executed by a processor, cause the processor to carry out a method according to the fourth aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** shows a general arrangement of a turbofan engine for an aircraft;
**Figure 2** shows a detailed view of a downstream portion of the turbofan engine of Figure 1;
**Figure 3** shows another detailed view of the downstream portion of the turbofan engine of Figure 1;
**Figure 4** shows a schematic diagram of an example system for calculating an angular speed of a low-pressure turbine of the turbofan engine of Figures 1 to 3;
**Figure 5** is a flowchart which shows an example method of calculating an angular speed of the low-pressure turbine of the turbofan engine of Figures 1 to 3 using the example system of Figure 4;
**Figure 6** is a graph showing an example result of a step of the example method of Figure 5;
**Figure 7** is a flowchart showing an example implementation of a further step of the example method of Figure 5;
**Figure 8** is a flowchart showing an example implementation of an additional step of the example method of Figure 5; and
**Figure 9** shows a non-transitory machine-readable medium having stored thereon a computer program which, when executed by a computer, causes the computer to perform the example method of Figure 5.

### DETAILED DESCRIPTION

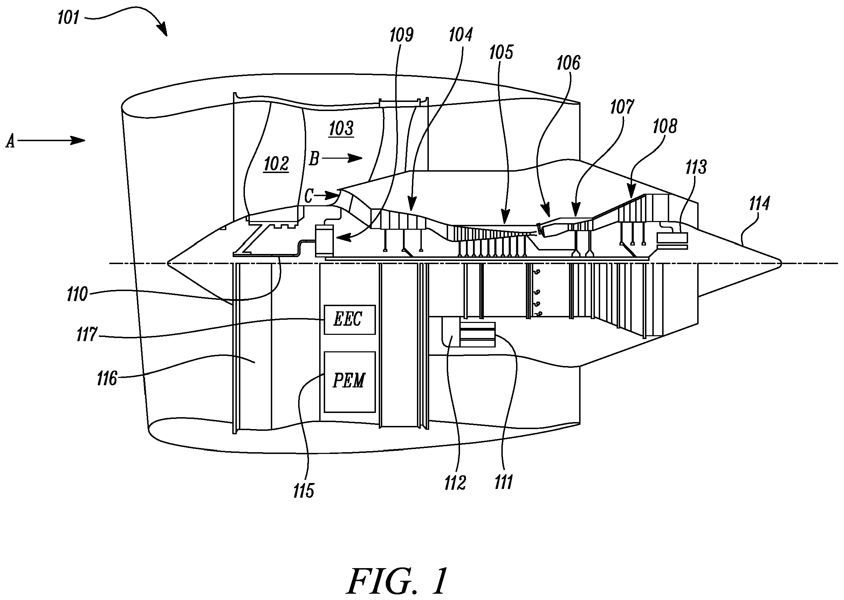

A general arrangement of an engine 101 for an aircraft is shown in **Figure 1****.** The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools. If the gas turbine engine comprises three spools, the core gas turbine may comprise, a low-pressure compressor, an intermediate-pressure compressor, a high-pressure compressor, a combustor, a high-pressure turbine, an intermediate-pressure turbine, and a low-pressure turbine.

The fan 102 is driven by the low-pressure turbine 108 via a reduction gearbox in the form of a planetary-configuration epicyclic gearbox 109. Thus in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of the present embodiment comprises one or more rotary electric machines, generally capable of operating both as a motor and as a generator. The number and arrangement of the rotary electric machines will depend to some extent on the desired functionality. Some embodiments of the engine 101 include a single rotary electric machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in Figure 1, comprise both a first rotary electric machine 111 coupled with the high-pressure spool and a second rotary electric machine 113 coupled with the low pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in Figure 1 the first rotary electric machine 111 is driven by the high-pressure spool by a core-mounted accessory drive 112 of conventional configuration. In alternative embodiments, the first electric machine 111 may be mounted coaxially with the turbomachinery in the engine 101. For example, the first electric machine 111 may be mounted axially in line with the duct between the low- and high-pressure compressors 104 and 105. In Figure 1, the second electric machine 113 is mounted in the tail cone 114 of the engine 101 coaxially with the turbomachinery and is coupled to the low-pressure turbine 108. In alternative embodiments, the second rotary electric machine 113 may be located axially in line with low-pressure compressor 104, which may adopt a bladed disc or bladed drum configuration to provide space for the second rotary electric machine 113. It will of course be appreciated by those skilled in the art that any other suitable location for the first and (if present) second electric machines may be adopted.

The first and second electric machines 111, 113 are connected with power electronics. Extraction of power from or application of power to the electric machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electric machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e., both of the core gas turbine and the first and second electric machines 111 and 113. In this way, the EEC 117 may holistically respond to both thrust demand and electrical power demand.

The one or more rotary electric machines 111, 113 and the power electronics 115 may be configured to output to or receive electric power from one, two or more dc busses. The dc busses allow for the distribution of electrical power to other engine electrical loads and to electrical loads on the airframe. The dc busses may further receive electrical power from, or deliver electrical power to, an energy storage system such as one or more battery modules or packs.

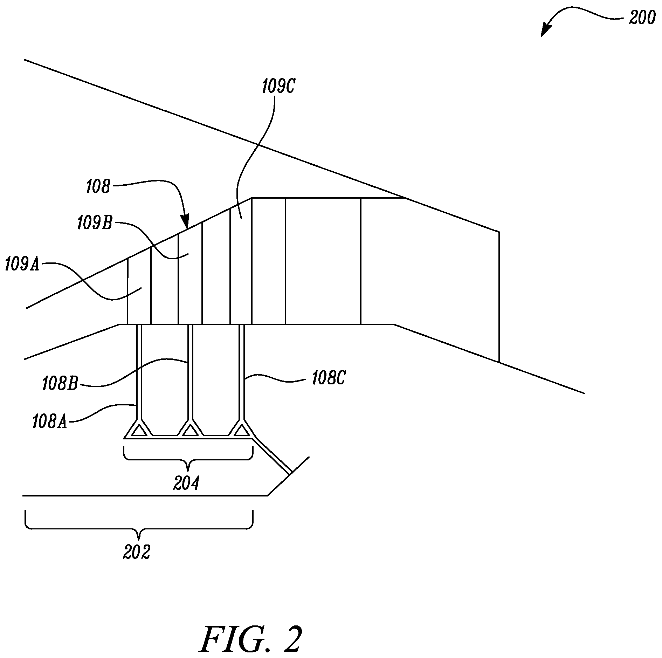

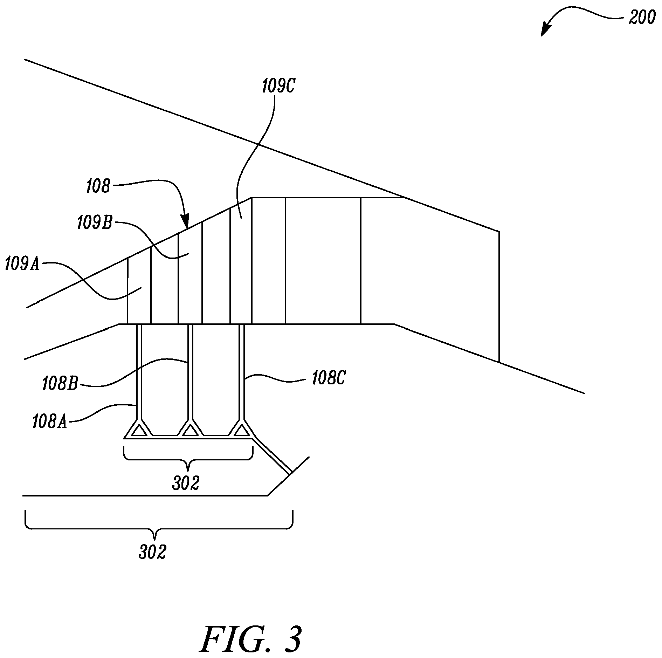

Those skilled in the art will appreciate that the gas turbine engine 101 described above may be regarded as a 'more electric' gas turbine engine because of the increased role of the electric machines 111, 113 compared with those of conventional gas turbines. **Figures 2** **and** **3** each show detailed views of a downstream portion 200 of the gas turbine engine 101 of Figure 1. The downstream portion 200 includes the low-pressure turbine 108. The low-pressure turbine 108 comprises a plurality of low-pressure turbine discs 108A, 108B, 108C. Each low-pressure turbine disc 108A, 108B, 108C has a plurality of blades 109A, 109B, 109C extending away from a centre of the low-pressure turbine 108 (and therefore away from a centre of the shaft to which the low-pressure turbine 108 is mechanically coupled).

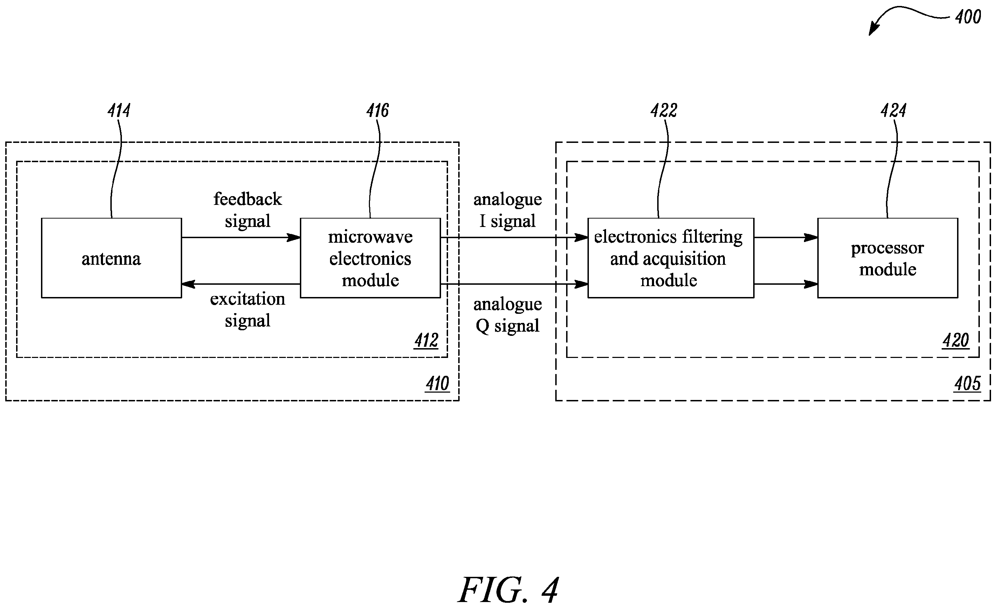

Although the description is introduced with references to the example gas turbine engine described with respect to Figures 1 to 3, it will be appreciated that the principles and methodologies described with respect to Figures 4 to 9 are broadly applicable to gas turbine engines having a variety of configurations and topologies, as well as to rotary components which do not form a part of a gas turbine engine.

**Figure 4** shows a schematic diagram of a system 400 for calculating an angular speed of a rotary component, such as a disc of the low-pressure turbine 108 (or an intermediate-pressure turbine or a high-pressure turbine). The system 400 comprises a sensor arrangement 410 and a data processor apparatus 405 comprising processor circuitry 420. The processor circuitry 420 includes an electronic filtering and acquisition (EFA) module 422 and a processor module 424.

The electronic filtering and acquisition (EFA) module 422 and/or processor module 424 may comprise any suitable circuitry to cause performance of the methods described herein and as illustrated in the drawings. To this end, the electronic filter and acquisition (EFA) module 422 may comprise: lightning strike protection and radio frequency interference filtering; an amplifier; an anti-aliasing filter (low pass, second or third order electronic filter) and an analogue to digital converter (ADC). The processor module 424 may comprise: at least one application specific integrated circuit (ASIC); and/or at least one field programmable gate array (FPGA); and/or single or multiprocessor architectures; and/or sequential (Von Neumann)/parallel architectures; and/or at least one programmable logic controllers (PLCs); and/or at least one microprocessor; and/or at least one microcontroller; and/or a central processing unit (CPU).

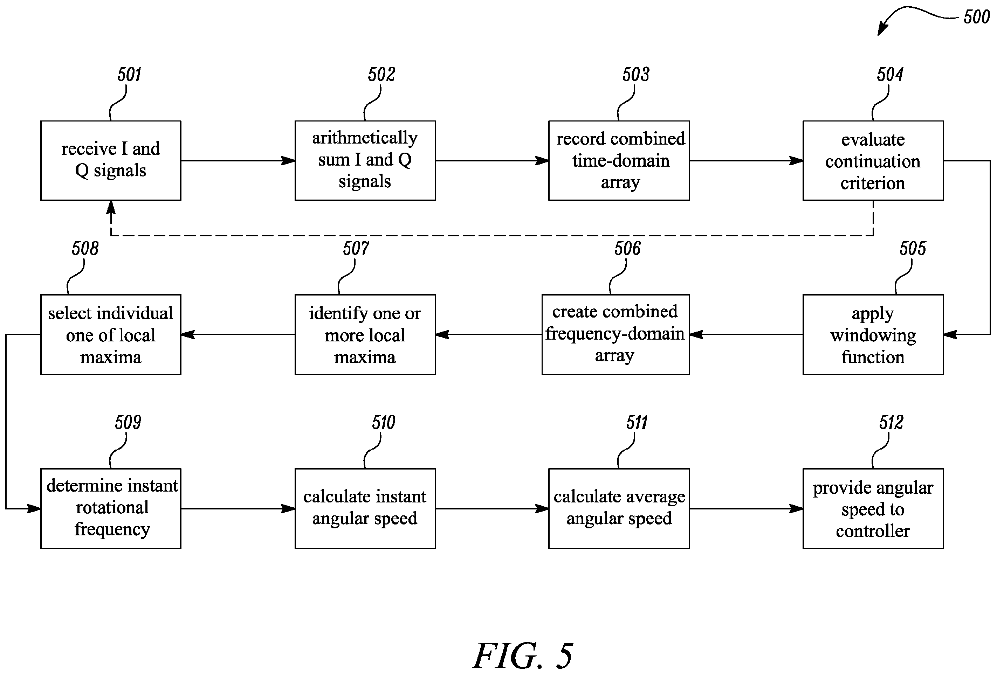

The processor circuitry 420 is generally configured to calculate an angular speed of the turbine disc by carrying out the method described below with reference to Figure 5. The system 400 (e.g., the data processor apparatus 405) may be communicatively coupled to, or form an extension of, the EEC 117 of the gas turbine engine 101.

In this example, the sensor arrangement 410 comprises a microwave sensor 412. In turn, the microwave sensor 412 includes a microwave electronics module 416 and an antenna 414. The microwave electronics module 416 may generally comprise an oscillator (e.g., an electronic oscillator such as a magnetron) for generating an excitation signal and a receiver for receiving a feedback signal. These signals are described in further detail below. A benefit of using a microwave sensor 412 for calculation of the angular speed of the low-pressure turbine 108 is increased safety of the gas turbine engine 101 as a consequence of being able to detect (e.g., calculate) the angular speed of the relevant shaft further along a "torque path" through the gas turbine engine 101. In a previously-considered system for calculating an angular speed of the low-pressure turbine 108, a toothed phonic wheel was mounted to the shaft connected to the low-pressure turbine 108 (that is, the low-pressure shaft) between respective sets of turbine blades and a reluctance probe was placed nearby for the purpose of acquiring the angular speed of the low-pressure shaft.

Figure 2 shows a detectable torque path 202 along the low-pressure shaft for this previously-considered system and undetectable torque path 204 along the low-pressure shaft for this previously-considered system. In particular, because of the location of the phonic wheel, a shaft failure which occurs in the undetectable torque path 204 (e.g., between the foremost set of blades 109A and the adjacent set of blades 109B of the low-pressure turbine 108) will not be detected by the previously-considered system. This risk would need to be mitigated and accommodated in the design of the gas turbine engine, adding weight and complexity thereto. In contrast, Figure 3 shows a detectable torque path 302 along the low-pressure shaft for a system in accordance with the present disclosure, the system comprising a microwave sensor 412. Compared to Figure 2, the detectable torque path has been extended all the away to a foremost set of blades 109A, or the set of blades which is furthest along the torque path as a whole, of the low-pressure turbine 108 (e.g., the foremost low-pressure turbine disc 108A, or the turbine disc which is furthest along the torque path as a whole) as a consequence of the antenna 414 of the microwave sensor 412 being pointed at the foremost set of turbine blades 109A. The detectable torque path 302 now includes a point on the low-pressure shaft at which the torque is typically greatest during use. Accordingly, the system 400 is able to adequately detect a shaft failure at a location at which such an event is most likely to occur and which would not be detected by the previously-considered system.

The microwave electronics module 416 is configured to provide an excitation signal to the antenna 414. The antenna 414 is pointed towards the blades of the low-pressure turbine 108 (or the intermediate-pressure or high-pressure turbine, in other examples) and emits microwave radiation in the direction of the blades of the low-pressure turbine 108 in accordance with the received excitation signal. By way of example, the antenna 414 may be located radially outward of the low-pressure turbine 108 (or the intermediate-pressure or high-pressure turbine, in other examples) and be pointed radially inward toward the tips of the blades of the low-pressure turbine 108 (or the intermediate-pressure or high-pressure turbine, in other examples). If so, the antenna 414 emits radiation toward the tips of the blades of the low-pressure turbine 108 in accordance with the excitation signal received from microwave electronics module 416. The emitted microwave radiation is reflected off the blades of the low-pressure turbine 108 and is received by the antenna 414. The antenna 414 generates a feedback signal which corresponds to the reflected microwave radiation and provides the feedback signal to the microwave electronics module 416. The feedback signal relates to the position of the low-pressure turbine 108 (e.g., to the position of a blade of the low-pressure turbine 108 which is passing the antenna 414). In some examples, the antenna 414 may be otherwise mounted and positioned so as to generate a feedback signal relating to the position of the low-pressure turbine 108 (or the intermediate-pressure or high-pressure turbine, in other examples).

The microwave electronics module 416 produces (e.g., generates) in-phase (I) and quadrature (Q) analogue component signals based on the feedback signal as well as the excitation signal, as will be appreciated by those skilled in the art. The microwave electronics module 416 may produce the I and Q analogue component signals based on both the excitation signal and the feedback signal. For example, the microwave electronics module 416 may generate a shifted signal based on a difference between the excitation signal and the feedback signal and decompose the shifted signal into the I and Q analogue component signals. The I and Q analogue component signals are therefore generated by the microwave sensor 412 according to the position (e.g., the angular position) of the low-pressure turbine 108.

The EFA module 422 converts the I and Q analogue component signals into the in-phase (I) and quadrature (Q) digital component signals. That is to say that the EFA module 422 processes the received I and Q analogue component signals so as to convert each from an analogue signal into a digital signal. In this way, the EFA module 422 functions as an analogue-to-digital converter (ADC). The EFA module 422 then provides the I and Q digital component signals to the processor module 424. This disclosure also envisages that the processor circuitry 420 may not comprise an EFA module 422. If so, the processor module 424 may include ADC functionality and be configured to receive the I and Q analogue signals directly from the sensor arrangement 410 (e.g., from the microwave electronics module 416).

The processor module 424 then calculates an angular speed of the low-pressure turbine 108 (e.g., an angular speed of the shaft to which the low-pressure turbine 108 is connected) based on the I and Q component signals, as described in further detail below. The processor module 424 may then provide the calculated angular speed to a controller of the gas turbine engine (not shown), which may be the EEC 117 described above with reference to Figure 1. In some examples, the processor circuitry 420 may form a part of the EEC 117.

**Figure 5** is a flowchart which shows an example method 500 of calculating an angular speed of the low-pressure turbine 108 using the processor module 424 of the system 400 (e.g., of the data processor apparatus 405) described above with reference to Figure 4. Although the steps of the method 500 are described sequentially herein, it will be appreciated that the steps of the method 500 may be executed in any suitable order and/or concurrently where appropriate. Moreover, it will be recognised that while the method 500 has been devised in the context of, and is described with reference to, calculating the angular speed of a low-pressure turbine of a gas turbine engine, the method 500 described herein is suitable for calculating an angular speed of rotary component(s) in general (e.g., a different rotary component of the gas turbine engine 101 or another type of rotary component altogether). References to the low-pressure turbine 108 herein are to be interpreted accordingly.

The method 500 comprises, at block 501, a step of receiving the I and Q digital component signals from the EFA module 422. The I and Q digital component signals are each received as single (1 by 1) values. The method 500 also comprises, at block 502, a step of arithmetically summing the in-phase signal and the quadrature signal to produce a combined time-domain signal. The combined time-domain signal is therefore also a single (1 by 1) value. Arithmetic summation of the I and Q digital component signals in this manner is associated with a more reliable and/or robust calculation of the angular speed of the low-pressure turbine 108 compared to previously-considered methodologies. In particular, this methodology may enable the angular speed of the low-pressure turbine 108 to be calculated even if either the I or Q digital component signal is lost (i.e., is not received by the processor circuitry 420 from the sensor arrangement 410).

In order for the method 500 to result in calculation of a highly accurate angular speed of the low-pressure turbine 108, the I and Q signals which are arithmetically summed, at block 502, should be substantially temporally aligned. More specifically, a temporal misalignment between the I and Q signals which are arithmetically summed, at block 502, should be no greater than a 1.5 microseconds (e.g. should have a delay of less than or equal to 1.5 microseconds therebetween). To this end, the EFA module 422 may be selected for use such that and/or configured such that a temporal misalignment between the converted digital in-phase signal and the converted digital quadrature signal is no greater than 1.5 microseconds. Additionally or alternatively, the sensor arrangement 410 selected for use within the system 400 may be configured to generate the I and Q component signals with a temporal misalignment therebetween of no greater than 1.5 microseconds. In other words, any temporal misalignments between the I and Q component signals caused by the hardware within the microwave electronics module 416 (e.g., by oscillator and the receiver) is no greater than 1.5 microseconds. This may be achieved by using analogue electronics for the microwave electronics module 416 or by using digital electronics having appropriate characteristics.

The method 500 comprises, at block 503, a step of recording the combined time-domain signal as a new element in a combined time-domain array. The combined time-domain array is an Nx1 array, where N is a length (e.g., a size) of the combined time-domain array. Optionally, N is selected (i.e., predetermined) based on the number of blades on the low-pressure turbine 108 and an expected maximum angular speed of the low-pressure turbine 108. In particular, N should preferably be selected so that, at the expected maximum angular speed of the low-pressure turbine 108, conversion of the combined time-domain array into a combined frequency-domain array (as described in further detail below with respect to block 506) does not result in several (e.g., a plurality of) local maxima being subsequently identified (as described in further detail below with reference to block 507) in the combined frequency-domain array. In addition or instead, N may be selected (i.e., predetermined) based on an expected minimum angular speed of the low-pressure turbine 108. In particular, N should preferably be selected so that, at the expected minimum angular speed of the low-pressure turbine 108, combined time-domain array is representative of more than one (e.g., several) blades of the low-pressure turbine 108 having passed the antenna 414. In other words, the length of the combined time-domain array is such that the combined time-domain array corresponds to a data recording period which is sufficient to capture a plurality of blades of the low-pressure turbine 108 passing the antenna 414. Application of this criterion, or each of these criteria, for sizing of the combined time-domain array ensures that a size of a memory provided to the processor circuitry 420 and/or a processing power of the processor module 424 are minimised while ensuring that the method 500 remains accurate at the expected maximum angular speed of the low-pressure turbine 108. In turn, this enables a wider range of electronic components to be selected for implementation of the processor module 424, thereby increasing an ease with which the system 400 (e.g., the data processor apparatus 405) may be manufactured. This may also be associated with small reductions in a size and/or a weight of the system 400 (e.g., the data processor apparatus 405).

The method 500 also comprises, at block 504, a step of evaluating a continuation criterion. If the continuation criterion is determined to have been met at block 504, the method 500 includes continuing to the steps described from block 505 onwards below. On the other hand, if the continuation criterion is determined to have not been met, the method 500 includes returning to the step of receiving, at block 501, the I and Q digital component signals from the EFA module 422 and continuing thereafter as described above. The continuation criterion may be determined to have been met, for example, if a predetermined number B of new elements have been recorded (e.g., entered) in the combined time-domain array since the continuation criterion was last determined to have been met. The predetermined number B of new elements is greater than unity such that the following steps of the method 500 are not performed every time a new element is recorded in the combined-time domain array. Namely, the step of converting the combined time-domain array into a combined frequency-domain data array (described below with reference to block 506) is only carried out in response to a determination that the predetermined number of new elements have been recorded in the combined time-domain array.

The predetermined number B may also be referred to as a stride B of the method 500. The predetermined number/stride B of the method 500 has a significant impact on an update rate of the calculated angular speed of the low-pressure turbine 108 as well as reducing a real estate of the processor module 424 (e.g., an FPGA real estate). The predetermined number/stride B may therefore be selected based on the particular technical application for which the method 500 is being used (e.g., based on the physical characteristics of the rotary component of which the angular speed is being calculated and/or an expected speed range of the rotary component). As a particular example, if the method 500 is to be used in conjunction with or for an overspeed protection function (e.g., of the EEC 117), and the maximum expected speed of the rotary component is relatively high, the predetermined number/stride B will be smaller than if the maximum expected speed of the rotary component were relatively low (and vice-versa). Additionally or alternatively, the predetermined number/stride B may be selected according to a desired data update rate (e.g., a refresh rate) for the calculated angular speed of the low-pressure turbine 108 while minimising a computational burden of the method 500.

The method 500 further comprises, at block 505, a step of applying a windowing function to the combined time-domain array as recorded in the preceding step. Application of the windowing function includes deriving a plurality of coefficients (e.g., predetermined coefficients) from the windowing function and multiplying each value in the combined time-domain array by a respective one of the plurality of coefficients. The windowing function is applied with the intention of minimising a width of the or each local maxima which is subsequently identified (as described in further detail below with reference to block 507) in the combined frequency-domain array which is produced based on the combined time-domain array, thereby facilitating more reliable and robust calculation of the instant rotational frequency of the low-pressure turbine 108 (as described in further detail below in respect of block 509). The inventors have found that use of a Hamming window function as the window function applied to the combined time-domain array is particularly effective.

In addition, the method 500 comprises, at block 506, a step of creating a combined frequency-domain array based on the combined time-domain array. That is, method 500 comprises converting the combined time-domain array into the combined frequency-domain array by means of a discrete Fourier transform (DFT) using, for instance, a fast Fourier transform (FFT) algorithm.

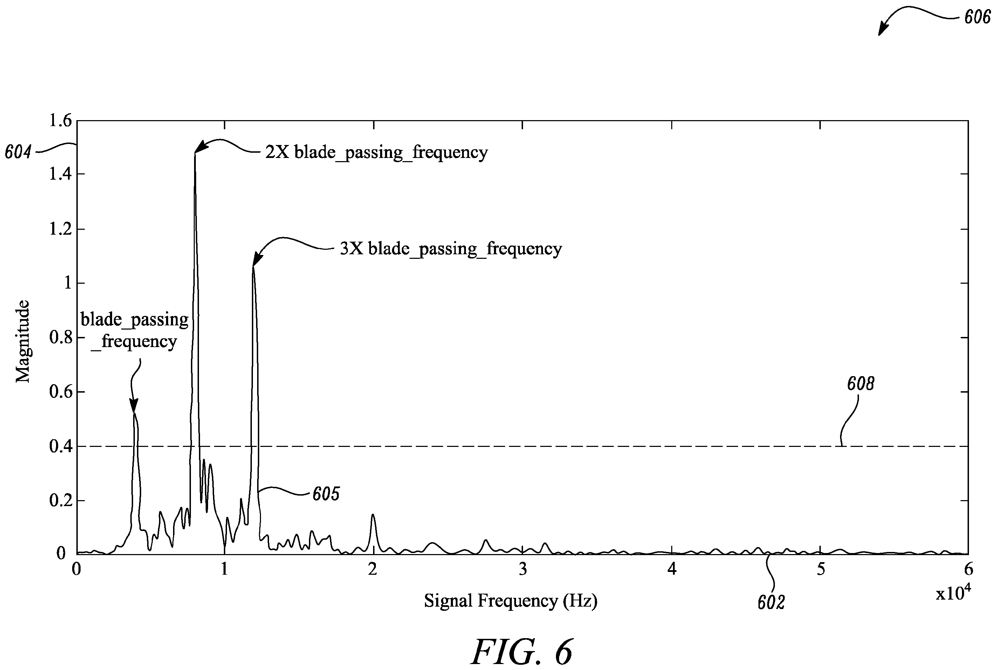

**Figure 6** is a graph 606 showing an example result of the step of converting the combined time-domain array into the combined frequency-domain array (represented by block 506 in Figure 5). The graph 606 includes an x-axis 602 which relates to frequency (expressed in units of x10⁴ Hz) and a y-axis 604 which relates to magnitude. The combined frequency-domain array is represented by a frequency-magnitude profile 605 in the plane defined by these axes.

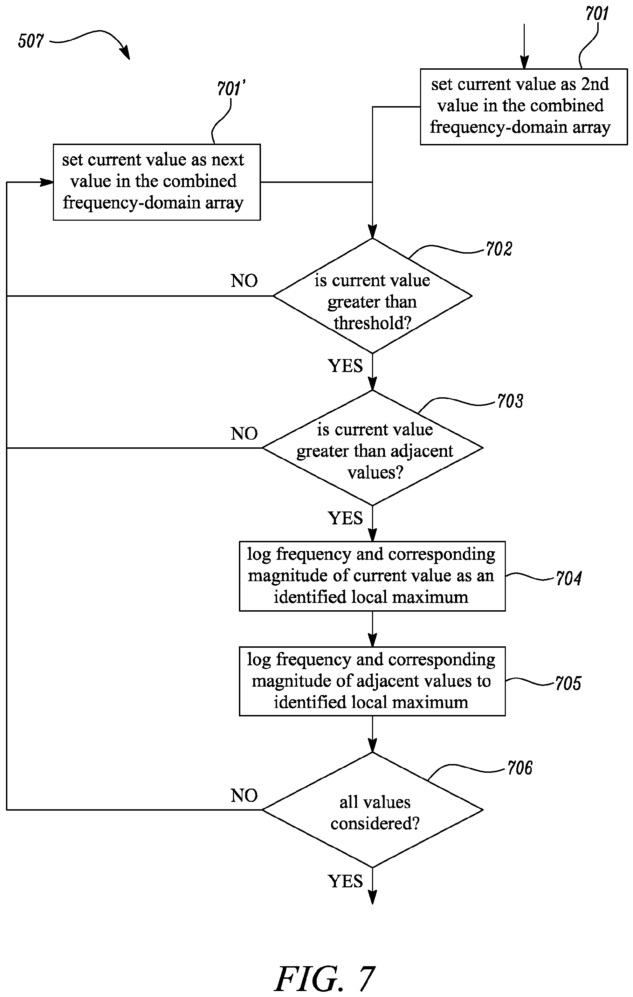

The method 500 also comprises, at block 507, a step of identifying one or more local maxima in the combined frequency-domain data array. **Figure 7** is a flowchart showing an example implementation of the step of identifying one or more local maxima in the combined frequency-domain data array (represented by block 507 in Figure 5). The step 507 commences, at sub-block 701, with an action of setting a current value to be considered as the second value (e.g., the second element) in the combined frequency-domain array.

The step 507 also includes, at sub-block 702, an action of comparing the current value to a predetermined magnitude threshold. The predetermined magnitude threshold may be expressed as a fixed value or expressed as a fraction (e.g., a percentage) of the largest value (that is, the element having the largest magnitude) in the combined frequency-domain array. In response to a determination at sub-block 702 that the current value is not greater than the predetermined magnitude threshold, the step 507 includes continuing to, at sub-block 701', an action of setting the current value to be considered as the next value (e.g., the next element) in the combined frequency-domain array before returning to the action of comparing, at sub-block 702, the current value to the predetermined magnitude threshold and continuing thereafter as described herein.

Alternatively, in response to a determination, at sub-block 702, that the current value is greater than the predetermined magnitude threshold, the step 507 includes continuing to, at sub-block 703, an action of comparing the current value to the values in the combined frequency-domain array on either side of the current value (i.e., the values adjacent to, and on opposing sides of, the current value in the combined frequency-domain array). At the sub-block 703, the method may comprise determining whether the current value is greater in value than both of these adjacent values by a predetermined threshold amount. The predetermined threshold amount may be an integer value of magnitude or may be expressed as a fraction, e.g. a percentage, of the current value. In response to a determination at sub-block 703 that the current value is not greater than both of these adjacent values, the step 507 includes continuing to, at sub-block 701', an action of setting the current value to be considered as the next value (e.g., the next element) in the combined frequency-domain array before returning to the action of comparing, at sub-block 702, the current value to the predetermined magnitude threshold and continuing thereafter.

On the other hand, in response to a determination, at sub-block 703, that the current value is greater than both of these adjacent values, the step 507 includes continuing to, at sub-block 704, an action of logging the frequency and corresponding magnitude of the current value as an identified local maximum. In other words, the current value is identified as a local maximum. The step 507 may also include, at sub-block 705, an action of logging the frequencies and corresponding magnitudes of each of the values adjacent to the identified local maximum (i.e., the adjacent values). The step then includes an action of determining whether all of the relevant values (i.e., at least the second value through to the penultimate value) in the combined frequency-domain have been considered (e.g., checked) by at least the action of comparing, at sub-block 702, the respective value to the predetermined peak. In response to a determination that not all of the values have been so considered, the step 507 includes continuing to, at sub-block 701', the action of setting the current value to be considered as the next value in the combined frequency-domain array and proceeding thereafter as described above. Otherwise, in response to a determination that all of the values have been so considered, the step 507 ends.

At the end of the step 507, one or more local maxima in the combined frequency-domain have been identified and their frequencies and corresponding magnitudes logged, each of which have magnitudes which exceed the predetermined magnitude threshold. The step of identifying one or more local maxima in the combined frequency-domain data array, at block 507, may therefore be described as including filtering the identified one or more local maxima such that that each of the identified one or more local maxima has a magnitude which exceeds the predetermined magnitude threshold. The predetermined magnitude threshold is selected to increase a likelihood that each of the identified one or more local maxima corresponds to an integer multiple of a frequency with which a blade of the low-pressure turbine 108 passes a reference point (e.g., the antenna 414 or a point on the a casing which surrounds the low-pressure turbine 108). In other words, the predetermined magnitude threshold is selected to increase the likelihood that each of the identified one or more local maxima corresponds to an integer multiple of a blade-passing frequency of the low-pressure turbine 108.

Figure 6 also shows a line 608 which corresponds to an example predetermined magnitude threshold which provides that three local maxima are identified at the end of the step 507. These include maxima which correspond to the blade-passing frequency itself (labelled as "blade_passing_frequency"), two times the blade-passing frequency (labelled as "2X blade_passing_frequency", and which may be referred to as the doubled blade-passing frequency), and three times the blade-passing frequency (labelled as "3X blade_passing_frequency" , and which may be referred to as the trebled blade-passing frequency).

From experimentation the inventors have observed that, of these three local maxima, the local maximum which corresponds to the blade-passing frequency tends to have the smallest magnitude, the local maximum which corresponds to the doubled blade-passing frequency tends to have the largest magnitude, and the local maximum which corresponds to the trebled blade-passing frequency tends to have the second largest magnitude. However, from the same experimental work, the inventors have observed that the local maximum which corresponds to the doubled blade-passing frequency can sometimes have a smaller magnitude than the local maximum which corresponds to the blade-passing frequency.

Returning now to description of Figure 5, the method 500 also comprises, at block 508, a step of selecting an individual one of the one or more local maxima identified in the preceding step. Preferably, the individual local maximum is selected, at block 508, as the one of the identified one or more local maxima for which the logged frequency approximately corresponds to the doubled blade-passing frequency of the low-pressure turbine 108. Experimentation carried out by the inventors has revealed that selection of the double blade-passing frequency results in more accurate calculation of the angular speed of the low-pressure turbine 108 (see the description below with reference to blocks 510 to 512). Nevertheless, in other examples, the individual local maximum may be selected, at block 508, as one of the identified one or more local maxima for which the logged frequency approximately corresponds to the blade-passing frequency.

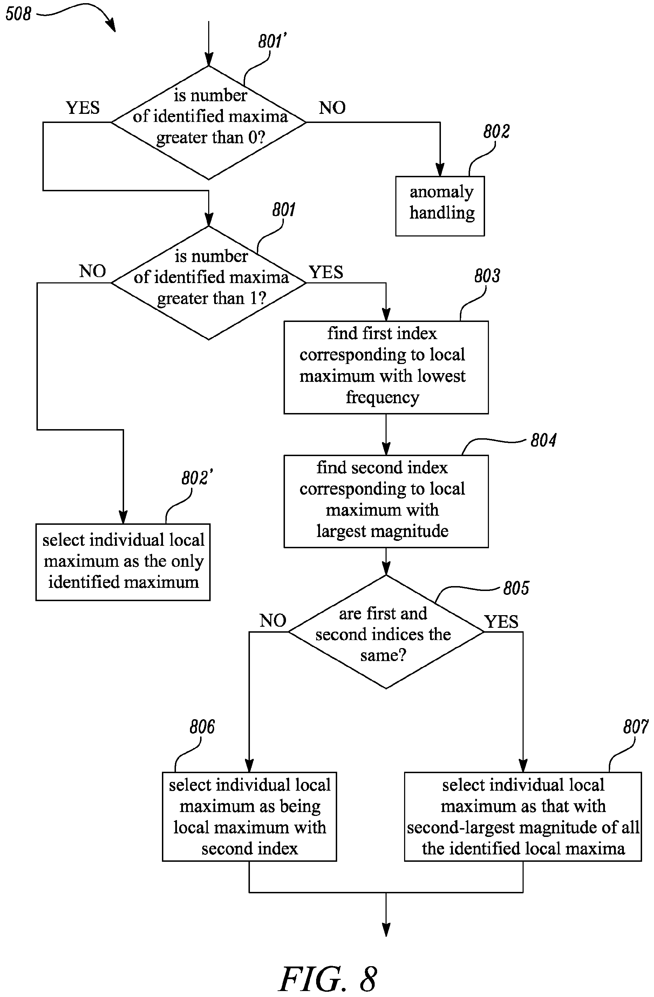

**Figure 8** is a flowchart showing an example implementation of the step of selecting the individual one of the identified one or more local maxima. The step 508 commences, at sub-block 801', with an action of determining whether the number of local maxima in the combined-frequency domain identified in the previous step 507 is greater than 0. If the number of identified local maxima is not greater than 0 (i.e., is equal to 0), the step 508 includes continuing to, at sub-block 802, an anomaly handling action. The anomaly handling action may include returning to the step of receiving, at block 501, the I and Q digital component signals from the EFA module 422 and continuing thereafter. In addition or instead, the anomaly handling action may include setting the instant angular speed of the low-pressure turbine 108 as being equal to zero and continuing to an action of calculating a median time-averaged angular speed of the low-pressure turbine 108 as described below with reference to block 511. On the other hand, if the number of identified local maxima is determined as being greater than 0 at sub-block 801', the step 508 includes continuing to, at sub-block 801, an action of determining whether the number of local maxima in the combined-frequency domain identified in the previous step 507 is greater than 1. If the number of identified local maxima is determined as not being greater than 1 (i.e., is equal to 1) at sub-block 801', the step 508 includes continuing to, at sub-block 802', an action of selecting the individual one of the identified one or more local maxima as being the only identified local maximum. In this case, the logged frequency of the only identified local maximum is assumed to approximately correspond to the blade-passing frequency for the purpose of the method 500 (and in particular, for the purpose of the steps described with reference to each of blocks 509 to 512 below).

Conversely, if the number of identified local maxima is determined as being greater than 1 (i.e., is equal to or greater than 2) at sub-block 801, the step 508 includes continuing to, at sub-block 803, an action of finding the index of the one or more local maxima identified in the previous step which has the lowest frequency of all the identified one or more local maxima. This is referred to as a first index. The step 508 also includes, at sub-block 804, an action of finding the index of the one or more local maxima identified in the previous step which has the largest magnitude of all the identified one or more local maxima. This is referred to as a second index. Further, the step 508 includes continuing to, at block 805, an action of determining whether the first index and the second index are the same.

If it is determined, at block 805, that the first index and the second index are different, the step 508 includes proceeding to, at block 806, an action of selecting the individual one of the identified one or more local maxima as being the local maximum which has the second index. Because the local maximum which corresponds to the doubled blade-passing frequency tends to have the largest magnitude (i.e., the local maximum having the second index), this action usually results in selection of the individual one of the identified one or more local maxima as being the local maximum which corresponds to the doubled blade-passing frequency.

On the other hand, if it is determined that the first index and the second index are the same, the step 508 includes proceeding to, at block 807, an action of selecting the individual one of the identified one or more local maxima as being the local maximum which has the second-largest magnitude of all the identified one or more local maxima. Because the local maximum which corresponds to the doubled blade-passing frequency can sometimes have a smaller magnitude than the local maximum which corresponds to the blade-passing frequency, this action also typically results in selection of the individual one of the identified one or more local maxima as being the local maximum which corresponds to the doubled blade-passing frequency.

Returning once again to description of Figure 5, the method 500 further comprises, at block 509, a step of determining an instant rotational frequency of the low-pressure turbine 108 based on the individual one of the identified one or more local maxima selected in the previous step.

If the individual local maximum was selected, at block 508, as one of the identified one or more local maxima for which the logged frequency approximately corresponds to double the blade-passing frequency, the step of determining the instant rotational frequency of the low-pressure turbine 108 includes determining a doubled instant rotational frequency of the low-pressure turbine 108. In some examples, the doubled instant rotational frequency of the low-pressure turbine 108 may be determined as being equal to the logged frequency of the selected individual local maximum divided by the number of blades of the low-pressure turbine 108. In preferred examples, the doubled instant rotational frequency of the low-pressure turbine 108 may be determined based on the logged frequencies and corresponding magnitudes of the selected individual local maximum as well as the adjacent values in the combined frequency-domain array (see sub-block 705 on Figure 7). That is, a doubled blade-passing frequency may be determined by interpolation using these three frequency values and the corresponding three magnitude values to find the frequency at which the magnitude is predicted to be highest in this range. The doubled instant rotational frequency of the low-pressure turbine 108 may then be determined as being equal to the doubled blade-passing frequency divided by the number of blades of the low-pressure turbine 108. The instant rotational frequency of the low-pressure turbine 108 is then determined as being exactly half of the doubled instant rotational frequency thereof.

Conversely, if the individual local maximum was selected, at block 508, as one of the identified one or more local maxima for which the logged frequency approximately corresponds to the blade-passing frequency, the instant rotational frequency of the low-pressure turbine 108 may be determined as being equal to the logged frequency of the selected individual local maximum divided by the number of blades of the low-pressure turbine 108. Preferably, the blade-passing frequency may be determined based on the logged frequencies and corresponding magnitudes of the selected individual local maximum as well as the adjacent values in the combined frequency-domain array (see sub-block 705 on Figure 7). That is, the blade-passing frequency may be determined by interpolation using these three frequency values and the corresponding three magnitude values (that is, the selected individual local maximum and a pair of adjacent values on opposing sides of the selected individual local maximum) to find the frequency at which the magnitude is predicted to be highest within this range. The instant rotational frequency of the low-pressure turbine 108 may then be determined as being equal to the blade-passing frequency divided by the number of blades of the low-pressure turbine 108.

The use of interpolation to determine the instant rotational frequency or the doubled instant rotational frequency of the low-pressure turbine 108 leads to a more accurate determination of the instant rotational frequency and/or allows a number of bins used in the DFT for the step of converting the combined time-domain array into the combined frequency-domain array to be reduced without significantly affecting the accuracy of the calculated angular speed of the low-pressure turbine 108. The inventors have found that spline and cubic interpolation methods are most effective for this purpose. Interpolation at either end of the combined frequency-domain array (i.e., at the first value or the last value) may make use of additional trailing and leading values (e.g., zeros and maximum values, respectively). Such additional trailing and leading values may be used to effectively pad out the edges of the combined frequency-domain array for the purposes of interpolation. Further, although the interpolation method referred to above used only three corresponding frequency and magnitude values, the interpolation method may use a greater number of corresponding frequency and magnitude values (e.g., five). For example, in the sub-block 705, two, three or any other number of adjacent values to the identified local maximum may be logged and may then be used in the interpolation to identify the blade passing frequency.

The method 500 comprises, at block 510, a step of calculating an instant angular speed of the low-pressure turbine 108 according to the instant rotational frequency of the low-pressure turbine 108 determined in the previous step. This step 510 may be carried out by multiplying the determined instant rotational frequency of the low-pressure turbine 108, expressed in units of Hz, by twice the value of pi to yield the instant angular speed of the low-pressure turbine 108 expressed in units of radians per second. This step 510 may otherwise be carried out by multiplying the determined instant rotational frequency of the low-pressure turbine 108, expressed in units of Hz, by sixty to yield the instant angular speed of the low-pressure turbine 108 expressed in units of revolutions per minute (rpm).

The method 500 comprises, at block 511, a step of calculating a median time-averaged angular speed of the low-pressure turbine 108 based on the instant angular speed of the low-pressure turbine 108 calculated in the previous step. Calculating the median time-averaged angular speed of the low-pressure turbine 108 includes recording a history of the instant angular speed of the low-pressure turbine 108 calculated in the previous step over a plurality of (e.g., a predetermined number of) repeated executions of the previous step and finding a median value of (all of the values in) the history of the instant angular speed of the low-pressure turbine 108. This median value is then set as being the median time-averaged angular speed of the low-pressure turbine 108. This step may therefore be described as a median-filtering step. The predetermined number of repeated executions of the preceding step which are recorded in the history of the instant angular speed of the low-pressure turbine 108 may be equal to or greater than three, such that the time-averaged angular speed of the low-pressure turbine 108 calculated in this step is the median value of at least three repeated executions of the previous step. If so, this step may be referred to as a three value median-filtering step.

Finally, the method 500 comprises, at block 512, a step of providing the calculated median time-averaged angular speed of the low-pressure turbine 108 to a controller (e.g., the EEC 117 of the gas turbine engine 101) or another control logic of the processor circuitry 420 which may then control, or result in control of, the gas turbine engine 101 based on the calculated median time-averaged angular speed of the low-pressure turbine 108. By way of example, the median time-averaged angular speed of the low-pressure turbine 108 calculated by the method 500 may be used for overspeed protection and/or shaft break protection functions of the EEC 117 or another controller associated with the gas turbine engine 101. Appropriate protection functions will be known to those skilled in the art.

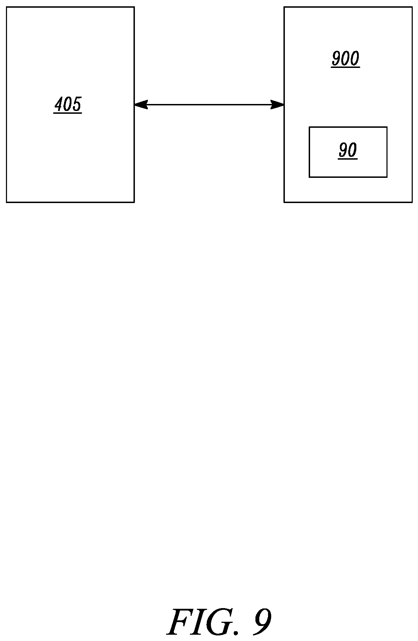

**Figure 9** is a highly schematic diagram illustrating a non-transitory machine-readable medium 900 having stored thereon instructions, such as a software program 90 (e.g. a computer program 30) which, when executed by a processor, e.g. a computer (such as the data processor apparatus 405 as described above with reference to the system 400 of Figure 4), cause the processor to execute the method 500 described above with reference to Figure 5.

Although the examples given have been described with reference to the example gas turbine engine described with respect to Figures 1 to 3, it will be appreciated that the principles and methodologies described with respect to Figures 4 to 9 are broadly applicable to gas turbine engines having a variety of configurations and/or topologies, as well as to rotary components which do not form a part of a gas turbine engine.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein. However, the invention is defined solely by the appended claims.

It will also be appreciated that whilst the invention has been described with reference to aircraft and aircraft propulsion systems, the principles described herein could be used for many other applications. These include, but are not limited to, automotive, marine and land-based applications.

## Claims

1. An apparatus (405) for calculating an angular speed of a rotary component (108), the apparatus (405) comprising processor circuitry (420) configured to:
receive (501) an in-phase signal and a quadrature signal from a sensor arrangement (410), each signal relating to a position of the rotary component (108);
arithmetically sum (502) the in-phase signal and the quadrature signal generated by the sensor arrangement (410) to produce a combined time-domain signal;
record (503) the combined time-domain signal as a new element in a combined time-domain array;
convert (506) the combined time-domain array into a combined frequency-domain data array;
identify (507) one or more local maxima in the combined frequency-domain data array; and
calculate (510, 511) an instant angular speed of the rotary component (108) based on the identified one or more local maxima and a number of blades (109A, 109B, 109C) of the rotary component (108).

2. The apparatus of claim 1, wherein the processor circuitry is configured to:
convert the combined time-domain array into a combined frequency-domain data array only in response to a determination that a predetermined number of new elements have been recorded in the combined time-domain array.

3. The apparatus of claim 2, wherein the processor circuitry is configured to:
multiply (505) each value in the combined time-domain frequency array by a respective predetermined coefficient prior to converting the combined time-domain array into a combined frequency-domain data array.

4. The apparatus of claim 3, wherein each predetermined coefficient is derived from a Hamming window function.

5. The apparatus of any preceding claim, wherein the processor circuitry is configured to:
filter the identified one or more local maxima such that each of the identified one or more local maxima has a magnitude which exceeds a predetermined magnitude threshold.

6. The apparatus of any preceding claim, wherein
the rotary component (108) has a number of blades (109A, 109B, 109C), and
the processor circuitry (420) is configured to:
calculate the instant angular speed of the rotary component based on an individual one of the identified one or more local maxima and the number of blades of the rotary component, the individual local maximum being selected as relating to a frequency which approximately corresponds to double a frequency with which a blade of the rotary component passes a reference point.

7. The apparatus of claim 6, wherein the processor circuitry (420) is configured to:
in response to a determination that the number of identified one or more local maxima is equal to or greater than 2:
find a first index, wherein the first index being the index of the local maximum having the lowest frequency of all the identified one or more local maxima;
find a second index, wherein the second index is the index of the local maximum having the largest magnitude of all the identified one or more local maxima;
select the individual local maximum as being the local maximum having the second-largest magnitude of all the identified one or more local maxima, if the first index is the same as the second index; and
select the individual local maximum as being the local maximum with the second index, if the first index differs from the second index.

8. The apparatus of claim 6 or claim 7, wherein the processor circuitry (420) is configured to:
determine a doubled rotational frequency of the rotary component (108) based on the individual one of the identified local maxima and at least a pair of adjacent values on opposing sides of the individual one of the identified local maxima in the combined frequency-domain data array; and
calculate the instant angular speed of the rotary component (108) based on the doubled rotational frequency of the rotary component (108).

9. The apparatus of any preceding claim, wherein the processor circuitry (420) is configured to:
record a history of the instant angular speed of the rotary component (108); and
calculate a median time-averaged angular speed of the rotary component (108) based on the recorded history of the instant angular speed of the rotary component (108).

10. A system (400) comprising the apparatus (405) of any preceding claim and the sensor arrangement (410), wherein the sensor arrangement (410) is configured to generate the in-phase signal and the quadrature signal according to the angular position of the rotary component (108).

11. The system of claim 10, wherein the sensor arrangement (410) comprises a microwave sensor (412), and wherein the sensor arrangement (410) is configured to generate the in-phase signal and the quadrature signal based on a feedback signal produced by the microwave sensor (412).

12. A gas turbine engine (101) comprising: the apparatus (405) of any of claims 1 to 9 or the system (400) of any of claims 10 or 11, the rotary component (108) and a controller (117), wherein the controller (117) is configured to control operation of the gas turbine engine (101) based on the calculated angular speed of the rotary component (108).

13. A method of calculating an angular speed of a rotary component (108), the method comprising:
receiving (501) an in-phase signal and a quadrature signal from a sensor arrangement (410), each signal relating to a position of the rotary component (108);
arithmetically summing (502) the in-phase signal and the quadrature signal generated by the sensor arrangement (410) to produce a combined time-domain signal;
recording (503) the combined time-domain signal as a new element in a combined time-domain array;
converting (506) the combined time-domain array into a combined frequency-domain data array;
identifying (507) one or more local maxima in the combined frequency-domain data array; and
calculating (510, 511) an instant angular speed of the rotary component (108) based on the identified one or more local maxima and a number of blades (109A, 109B, 109C) of the rotary component (108).

14. A computer program comprising instructions which, when the program is executed by a computer, cause the computer to carry out a method as claimed in claim 13.

## Patentansprüche

1. Vorrichtung (405) zur Berechnung einer Winkelgeschwindigkeit einer rotierenden Komponente (108), wobei die Vorrichtung (405) Prozessorschaltung (420) umfasst, die zu Folgendem konfiguriert ist:
Empfangen (501) eines gleichphasigen Signals und eines Quadratursignals von einer Sensoranordnung (410), wobei sich jedes Signal auf eine Position der rotierenden Komponente (108) bezieht;
arithmetisches Summieren (502) des gleichphasigen Signals und des Quadratursignals, die durch die Sensoranordnung (410) erzeugt werden, um ein kombiniertes Zeitbereichssignal zu produzieren;
Aufzeichnen (503) des kombinierten Zeitbereichssignals als neues Element in einem kombinierten Zeitbereichsarray;
Umwandeln (506) des kombinierten Zeitbereichsarrays in ein kombiniertes Frequenzbereichsdatenarray;
Identifizieren (507) von einem oder mehreren lokalen Maxima in dem kombinierten Frequenzbereichsdatenarray; und
Berechnen (510, 511) einer momentanen Winkelgeschwindigkeit der rotierenden Komponente (108) basierend auf dem/den identifizierten einen oder mehreren lokalen Maxima und einer Anzahl an Schaufeln (109A, 109B, 109C) der rotierenden Komponente (108).

2. Vorrichtung nach Anspruch 1, wobei die Prozessorschaltung zu Folgendem konfiguriert ist:
Umwandeln des kombinierten Zeitbereichsarrays in ein kombiniertes Frequenzbereichsdatenarray nur als Reaktion auf eine Bestimmung, dass eine vorbestimmte Anzahl an neuen Elementen in dem kombinierten Zeitbereichsarray aufgezeichnet worden ist.

3. Vorrichtung nach Anspruch 2, wobei die Prozessorschaltung zu Folgendem konfiguriert ist:
Multiplizieren (505) jedes Wertes in dem kombinierten Zeitbereichsfrequenzarray mit einem jeweiligen vorbestimmten Koeffizienten vor dem Umwandeln des kombinierten Zeitbereichsarrays in ein kombiniertes Frequenzbereichsdatenarray.

4. Vorrichtung nach Anspruch 3, wobei jeder vorbestimmte Koeffizient von einer Hamming-Fensterfunktion abgeleitet ist.

5. Vorrichtung nach einem vorhergehenden Anspruch, wobei die Prozessorschaltungsanordnung zu Folgendem konfiguriert ist:
Filtern des/der identifizierten einen oder mehreren lokalen Maxima, sodass jedes von dem/den identifizierten einen oder mehreren lokalen Maxima eine Größe aufweist, die einen vorbestimmten Größenschwellenwert überschreitet.

6. Vorrichtung nach einem vorhergehenden Anspruch, wobei
die rotierende Komponente (108) eine Anzahl an Schaufeln (109A, 109B, 109C) aufweist, und
die Prozessorschaltung (420) zu Folgendem konfiguriert ist:
Berechnen der momentanen Winkelgeschwindigkeit der rotierenden Komponente basierend auf einem einzelnen von dem/den identifizierten einen oder mehreren lokalen Maxima und der Anzahl an Schaufeln der rotierenden Komponente, wobei das einzelne lokale Maximum als sich auf eine Frequenz beziehend ausgewählt ist, die ungefähr dem Doppelten einer Frequenz entspricht, mit der eine Schaufel der rotierenden Komponente einen Referenzpunkt passiert.

7. Vorrichtung nach Anspruch 6, wobei die Prozessorschaltung (420) zu Folgendem konfiguriert ist:
als Reaktion auf eine Bestimmung, dass die Anzahl an einem oder mehreren identifizierten lokalen Maxima gleich oder größer als 2 ist:
Finden eines ersten Index, wobei der erste Index der Index des lokalen Maximums mit der niedrigsten Frequenz von allen von dem einen oder den mehreren identifizierten lokalen Maxima ist;
Finden eines zweiten Index, wobei der zweite Index der Index des lokalen Maximums mit der größten Größe von allen von dem einen oder den mehreren identifizierten lokalen Maxima ist;
Auswählen des einzelnen lokalen Maximums als das lokale Maximum mit der zweitgrößten Größe von allen von dem einen oder den mehreren identifizierten lokalen Maxima, wenn der erste Index der gleiche wie der zweite Index ist; und
Auswählen des einzelnen lokalen Maximums als das lokale Maximum mit dem zweiten Index, wenn sich der erste Index von dem zweiten Index unterscheidet.

8. Vorrichtung nach Anspruch 6 oder Anspruch 7, wobei die Prozessorschaltung (420) zu Folgendem konfiguriert ist:
Bestimmen einer doppelten Rotationsfrequenz der rotierenden Komponente (108) basierend auf dem einzelnen der identifizierten lokalen Maxima und zumindest einem Paar von benachbarten Werten auf gegenüberliegenden Seiten des einzelnen der identifizierten lokalen Maxima in dem kombinierten Frequenzbereichsdatenarray; und
Berechnen der momentanen Winkelgeschwindigkeit der rotierenden Komponente (108) basierend auf der doppelten Rotationsfrequenz der rotierenden Komponente (108).

9. Vorrichtung nach einem vorhergehenden Anspruch, wobei die Prozessorschaltung (420) zu Folgendem konfiguriert ist:
Aufzeichnen einer Historie der momentanen Winkelgeschwindigkeit der rotierenden Komponente (108); und
Berechnen einer mittleren zeitgemittelten Winkelgeschwindigkeit der rotierenden Komponente (108) basierend auf der aufgezeichneten Historie der momentanen Winkelgeschwindigkeit der rotierenden Komponente (108).

10. System (400), umfassend die Vorrichtung (405) nach einem vorhergehenden Anspruch und die Sensoranordnung (410), wobei die Sensoranordnung (410) dazu konfiguriert ist, das gleichphasige Signal und das Quadratursignal gemäß der Winkelposition der rotierenden Komponente (108) zu erzeugen.

11. System nach Anspruch 10, wobei die Sensoranordnung (410) einen Mikrowellensensor (412) umfasst und wobei die Sensoranordnung (410) dazu konfiguriert ist, das gleichphasige Signal und das Quadratursignal basierend auf einem Rückkopplungssignal zu erzeugen, das durch den Mikrowellensensor (412) produziert wird.

12. Gasturbinentriebwerk (101), umfassend: die Vorrichtung (405) nach einem der Ansprüche 1 bis 9 oder das System (400) nach einem der Ansprüche 10 oder 11, die rotierende Komponente (108) und eine Steuerung (117), wobei die Steuerung (117) dazu konfiguriert ist, Betrieb des Gasturbinentriebwerks (101) basierend auf der berechneten Winkelgeschwindigkeit der rotierenden Komponente (108) zu steuern.

13. Verfahren zur Berechnung einer Winkelgeschwindigkeit einer rotierenden Komponente (108), wobei das Verfahren Folgendes umfasst:
Empfangen (501) eines gleichphasigen Signals und eines Quadratursignals von einer Sensoranordnung (410), wobei sich jedes Signal auf eine Position der rotierenden Komponente (108) bezieht;
arithmetisches Summieren (502) des gleichphasigen Signals und des Quadratursignals, die durch die Sensoranordnung (410) erzeugt werden, um ein kombiniertes Zeitbereichssignal zu produzieren;
Aufzeichnen (503) des kombinierten Zeitbereichssignals als neues Element in einem kombinierten Zeitbereichsarray;
Umwandeln (506) des kombinierten Zeitbereichsarrays in ein kombiniertes Frequenzbereichsdatenarray;
Identifizieren (507) von einem oder mehreren lokalen Maxima in dem kombinierten Frequenzbereichsdatenarray; und
Berechnen (510, 511) einer momentanen Winkelgeschwindigkeit der rotierenden Komponente (108) basierend auf dem/den identifizierten einen oder mehreren lokalen Maxima und einer Anzahl an Schaufeln (109A, 109B, 109C) der rotierenden Komponente (108).

14. Computerprogramm, das Anweisungen umfasst, die, wenn das Programm durch einen Computer ausgeführt wird, den Computer dazu veranlassen, ein Verfahren wie in Anspruch 13 beansprucht durchzuführen.

## Revendications

1. Appareil (405) de calcul d'une vitesse angulaire d'un composant rotatif (108), l'appareil (405) comprenant des circuits de processeur (420) conçus pour :
recevoir (501) un signal en phase et un signal en quadrature en provenance d'un agencement de capteur (410), chaque signal se rapportant à une position du composant rotatif (108) ;
additionner arithmétiquement (502) le signal en phase et le signal en quadrature générés par l'agencement de capteur (410) pour produire un signal combiné de domaine temporel ;
enregistrer (503) le signal combiné de domaine temporel en tant que nouvel élément dans un réseau combiné de domaine temporel ;
convertir (506) le réseau combiné de domaine temporel en un réseau combiné de données de domaine fréquentiel ;
identifier (507) un ou plusieurs maxima locaux dans le réseau combiné de données de domaine fréquentiel ; et
calculer (510, 511) une vitesse angulaire instantanée du composant rotatif (108) sur la base des un ou plusieurs maxima locaux identifiés et d'un nombre de pales (109A, 109B, 109C) du composant rotatif (108).

2. Appareil de la revendication 1, dans lequel le circuit de processeur est conçu pour :
convertir le réseau combiné de domaine temporel en un réseau combiné de données de domaine fréquentiel uniquement en réponse à une détermination du fait qu'un nombre prédéterminé de nouveaux éléments ont été enregistrés dans le réseau combiné de domaine temporel.

3. Appareil de la revendication 2, dans lequel le circuit de processeur est conçu pour :
multiplier (505) chaque valeur dans le réseau combiné de fréquence de domaine temporel par un coefficient prédéterminé respectif avant de convertir le réseau combiné de domaine temporel en un réseau combiné de données de domaine fréquentiel.

4. Appareil de la revendication 3, dans lequel chaque coefficient prédéterminé est dérivé d'une fonction de fenêtre de Hamming.

5. Appareil d'une quelconque revendication précédente, dans lequel le circuit de processeur est configuré pour :
filtrer les un ou plusieurs maxima locaux identifiés de sorte que chacun des un ou plusieurs maxima locaux identifiés présente une amplitude qui dépasse un seuil d'amplitude prédéterminé.

6. Appareil d'une quelconque revendication précédente, dans lequel
le composant rotatif (108) présente un certain nombre de pales (109A, 109B, 109C), et
le circuit de processeur (420) est conçu pour :
calculer la vitesse angulaire instantanée du composant rotatif sur la base d'un maximum local individuel parmi les un ou plusieurs maxima locaux identifiés et du nombre de pales du composant rotatif, le maximum local individuel étant sélectionné comme se rapportant à une fréquence qui correspond approximativement au double d'une fréquence à laquelle une pale du composant rotatif passe un point de référence.

7. Appareil de la revendication 6, dans lequel le circuit de processeur (420) est conçu pour :
en réponse à une détermination du fait que le nombre d'un ou de plusieurs maxima locaux identifiés est égal ou supérieur à 2 :
trouver un premier indice, dans lequel le premier indice est l'indice du maximum local présentant la fréquence la plus basse de tous les un ou plusieurs maxima locaux identifiés ;
trouver un second indice, dans lequel le second indice est l'indice du maximum local présentant la plus grande amplitude de tous les un ou plusieurs maxima locaux identifiés ;
sélectionner le maximum local individuel comme étant le maximum local présentant la deuxième plus grande amplitude de tous les un ou plusieurs maxima locaux identifiés, si le premier indice est le même que le second indice ; et
sélectionner le maximum local individuel comme étant le maximum local avec le second indice, si le premier indice diffère du second indice.

8. Appareil de la revendication 6 ou de la revendication 7, dans lequel le circuit de processeur (420) est conçu pour :
déterminer une fréquence de rotation doublée du composant rotatif (108) sur la base du maximum local individuel parmi les maxima locaux identifiés et d'au moins une paire de valeurs adjacentes de côtés opposés du maximum local individuel parmi les maxima locaux identifiés dans le réseau combiné de données de domaine fréquentiel ; et
calculer la vitesse angulaire instantanée du composant rotatif (108) sur la base de la fréquence de rotation doublée du composant rotatif (108).

9. Appareil d'une quelconque revendication précédente, dans lequel le circuit de processeur (420) est conçu pour :
enregistrer un historique de la vitesse angulaire instantanée du composant rotatif (108) ; et
calculer une vitesse angulaire médiane moyenne dans le temps du composant rotatif (108) sur la base de l'historique enregistré de la vitesse angulaire instantanée du composant rotatif (108).

10. Système (400) comprenant l'appareil (405) d'une quelconque revendication précédente et l'agencement de capteur (410), dans lequel l'agencement de capteur (410) est configuré pour générer le signal en phase et le signal en quadrature selon la position angulaire du composant rotatif (108).

11. Système de la revendication 10, dans lequel l'agencement de capteur (410) comprend un capteur à micro-ondes (412), et dans lequel l'agencement de capteur (410) est conçu pour générer le signal en phase et le signal en quadrature sur la base d'un signal de rétroaction produit par le capteur à micro-ondes (412).

12. Moteur à turbine à gaz (101) comprenant : l'appareil (405) de l'une quelconque des revendications 1 à 9 ou le système (400) de l'une quelconque des revendications 10 ou 11, le composant rotatif (108) et un dispositif de commande (117), dans lequel le dispositif de commande (117) est conçu pour commander le fonctionnement du moteur à turbine à gaz (101) sur la base de la vitesse angulaire calculée du composant rotatif (108).

13. Procédé de calcul d'une vitesse angulaire d'un composant rotatif (108), le procédé comprenant :
la réception (501) d'un signal en phase et d'un signal en quadrature en provenance d'un agencement de capteur (410), chaque signal se rapportant à une position du composant rotatif (108) ;
l'addition arithmétique (502) du signal en phase et du signal en quadrature générés par l'agencement de capteur (410) pour produire un signal combiné de domaine temporel ;
l'enregistrement (503) du signal combiné de domaine temporel en tant que nouvel élément dans un réseau combiné de domaine temporel ;
la conversion (506) du réseau combiné de domaine temporel en un réseau combiné de données de domaine fréquentiel ;
l'identification (507) d'un ou de plusieurs maxima locaux dans le réseau combiné de données de domaine fréquentiel ; et
le calcul (510, 511) d'une vitesse angulaire instantanée du composant rotatif (108) sur la base des un ou plusieurs maxima locaux identifiés et d'un nombre de pales (109A, 109B, 109C) du composant rotatif (108).

14. Programme informatique comprenant des instructions qui, lorsque le programme est exécuté par un ordinateur, amènent l'ordinateur à effectuer un procédé selon la revendication 13.
